# EUROPEAN PATENT SPECIFICATION

(11) **EP 1 712 998 B1**
(45) Date of publication and mention of the grant of the patent: **15.08.2007**
(21) Application number: 05256168.5
(22) Date of filing: 03.10.2005
(51) Int. Cl.: G06F 11/20

(54) **Remote copy system and remote copy method**
Fernkopiersystem und Fernkopierverfahren
Système et procédé de copie à distance

(30) Priority: 13.04.2005 JP 2005116083
(43) Date of publication of application: 18.10.2006
(60) Divisional application: 07009589.8
(73) Proprietor: Hitachi, Ltd., Tokyo (JP)
(72) Inventor: Iwamura, Takashige c/o Hitachi, Ltd., Tokyo 100-8220 (JP)
(74) Representative: Gill, Stephen Charles

(56) References cited:
- EP-A- 0 672 985
- US-B1- 6 681 303

## Description

This application is directed to similar subject matter to Japanese patent application H11-162094 and to assigned U. S. patent application Ser. No. 09/376,991, now United States Patent No. 6, 681, 303.

The present invention relates to a remote copy system and a remote copy method used between storage devices or between hosts.

A prior art technique is practically used such that contents of a physical volume or a logical volume are duplexed by means of remote copy between storage devices and that when a failure occurs in a storage device, the storage device is switched into that retaining the remote copy. Patent document 1 as shown, in the reference 1 and 2, discloses a duplex technique that such remote copy is performed not for the entirety of a volume but solely for a necessary portion of a volume.
Reference 1:
   Japanese patent application, H11-162044
Reference 2:
   United States Patent No. 6,681,303B1

In this technique, duplex is achieved for a specified portion of a volume. Nevertheless, finely tuned duplex is not achieved in a manner corresponding to areas of data treated by a specific application. Specifically, in the duplex of the contents of a database, computer management instructions at an Operating system level was required to be used in place of the instructions of the database. Further, duplex by the table unit in a database management system is not easily performed.

EP 0 672 985A discloses a remote data shadowing system which provides storage based, real time disaster recovery capability. Record updates at a primary site cause write I/O operations in a storage subsystem therein. The write I/O operations are time stamped and the time, sequence, and physical locations of the record updates are collected in a primary data mover. The primary data mover groups sets of the record updates and associated control information based upon a predetermined time interval, the primary data mover appending a prefix header to the record updates thereby forming self describing record sets. The self describing record sets are transmitted to a remote secondary site wherein consistency groups are formed such that the record updates are ordered so that the record updates can be shadowed in an order consistent with the order the record updates cause write I/O operations at the primary site.

Thus, preferably in the present invention, data is duplexed by the table unit which is an area of data treated in a database.

Preferably to address the above problem, an aspect of the present invention provides a remote copy system according to claim 1. A further aspect of the present invention provides a method for use in remote copy according to claim 11.

Preferably according to the invention, duplex is controlled by the table unit in a database by using instructions for a database management system.

Further aspects and features of the invention are set out in the claims.

In the Figures:
FIG. 1 is a diagram showing the overall configuration including a remote copy system according to a first embodiment.
FIG. 2 is a diagram showing the configuration of a remote copy system.
FIG. 3A is a diagram showing the details of a page shown in FIG. 2.
FIG. 3B is a diagram showing the details of a log shown in FIG. 2.
FIG. 4 is a diagram showing an example of configuration of a DB address-block address conversion table.
FIG. 5 is a diagram showing an example of a pair status management table.
FIG. 6 is a diagram showing processing for an UPDATE statement in a database.
FIG. 7 is a diagram showing processing for a COMMIT statement in a database.
FIG. 8 is a diagram showing processing for a pair formation instruction.
FIG. 9 is a diagram showing processing for a pair resynchronization instruction.
FIG. 10 is a diagram showing processing for a pair status reference instruction for a table.
FIG. 11 is a diagram showing processing for a COMMIT statement in a case where table write protection is set up.
FIG. 12 is a diagram showing abort processing in a control process of remote copy.
FIG. 13 is a diagram showing a processing for a pair of suspend instruction.
FIG. 14 is a diagram showing a process performed in the case of failure stop of remote copy.
FIG. 15 is a diagram showing the overall configuration including a remote copy system according to a second embodiment.

Embodiments of the invention are described below with reference to the drawings. The first embodiment treats a case where remote copy is performed mainly in a storage device level. The second embodiment is a modification of the first embodiment and treats a case where remote copy is performed mainly at the level of a host on which a database is operating. These are described successively.

### [First Embodiment]

### [Configuration of Remote Copy System]

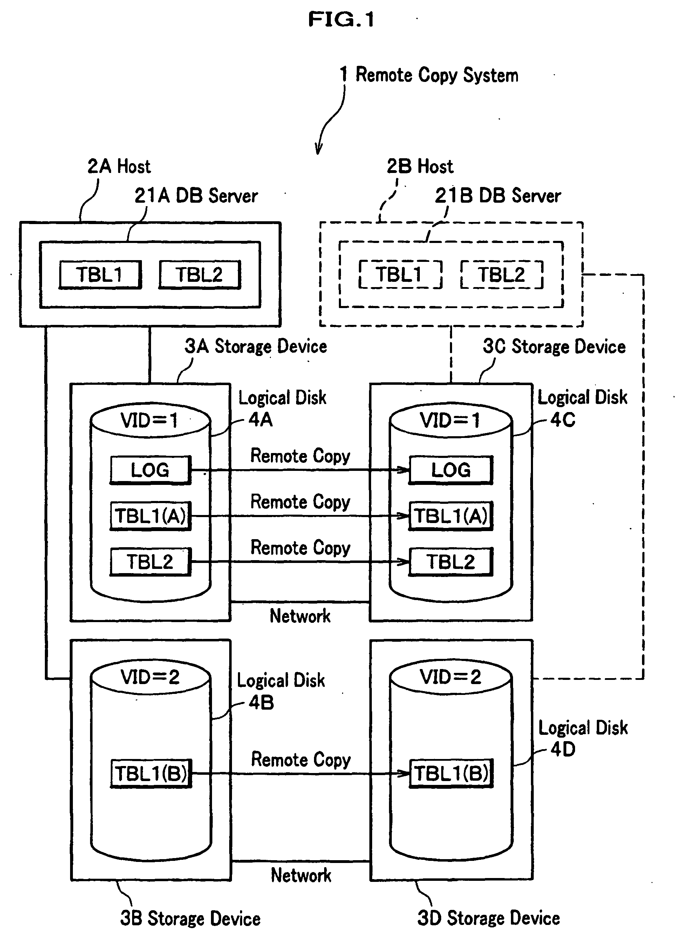

FIG. 1 is a diagram showing the overall configuration including a remote copy system according to a first embodiment. As shown in FIG. 1, a remote copy system 1 comprises a host 2A, copying source storage devices 3A and 3B and copying destination storage devices 3C and 3D. In FIG. 1, a host 2B is provided on the storage devices 3C and 3D side. However, the host 2B is not an indispensable component. Further, one storage device is shown on each of the copying source side and the,copying destination side. However, a plurality of storage devices may be provided on each side. For example, three storage devices may be connected to the host 2A.

Each of the storage devices 3A, 3B, 3C and 3D may include one or more logical disks. In the example of FIG. 1, the storage device 3A includes a logical disk 4A. The storage device 3B includes a logical disk 4B. The storage device 3C includes a logical disk 4C. The storage device 3D includes a logical disk 4D.

In the present embodiment, a table of a database of remote copy target is managed and read/written by the page unit in a database server ("DB server," hereinafter) 21A of the host 2A. In contrast, in the storage devices 3A, 3B, 3C and 3D, management is not performed by the page unit. Instead, the management is performed by the unit called a block. Further, read and write by the hosts 2A and 2B are performed by this unit. Thus, the size of a page used by the table of the database is usually an integral multiple of the size of a block.

As such, in the storage devices 3A, 3B, 3C and 3D, objects are managed by the block unit so that the following remote copy is performed. That is, remote copy is performed from the storage device 3A to the storage device 3C as well as from the storage device 3B to the storage device 3D. A method of managing this is described later.

A log and a table managed by the DB server 21A are not necessarily stored in a single disk device and logical disk, respectively. For example, as in the example of TBL1 shown in FIG. 1, a single table may be divided and stored in storage data areas (data areas) composed of blocks in a plurality of disk devices or logical disks. In this case, remote copy is performed for each of the divided storage data areas.

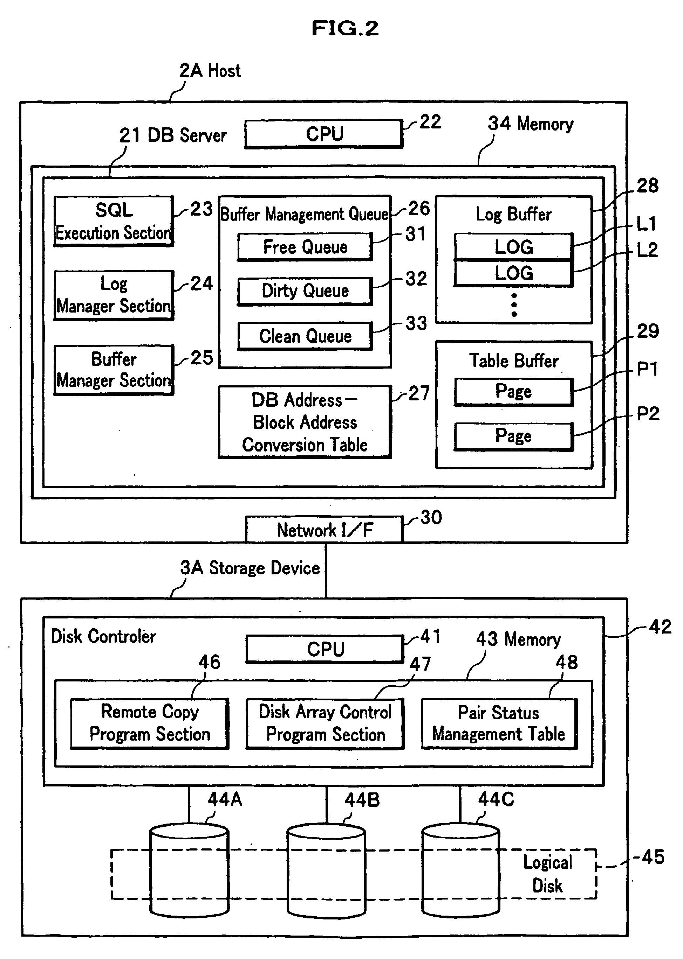

FIG. 2 is a diagram showing the configuration of the remote copy system. Here, described are the host 2A and the storage device 3A shown in FIG. 1. However, the host 2B and the storage devices 3B, 3C and 3D are similar.

### (Configuration of Host)

The host 2A is a computer comprising a CPU (Central Processing Unit) 22, a memory 34 and a network interface ("a network I/F", hereinafter) 30. The CPU 22 may be any type of CPU provided with a predetermined calculation function. Its type is not limited in a particular CPU. The memory 34 may be any type of memory such as an ordinary semiconductor memory applicable to the operation of the CPU 22. The type is not limited in a particular memory. The type of the network I/F 30 is not limited in a particular network and may be any type capable of communicating with the storage device 3A. For example, an interface may be adopted that can perform communication through a gigabit Ethernet (registered trademark), a fiber channel, or an FICON (which is a registered trademark and stands for Fiber Connection).

The memory 34 includes a DB server 21 and covers server program for some applications. The DB server 21 contains an SQL execution section 23, a log manager section 24 and a buffer manager section 25. These sections 23-25 are programs. The DB server 21 contains a buffer management queue 26, a DB address-block address conversion table 27, a log buffer 28 and a table buffer 29.

The SQL execution section 23 analyzes an SQL statement and performs read or write of a record on the table buffer 29. When it performs write, the SQL execution section 23 writes a log into the log buffer 28. Further, in necessary cases, the SQL execution section 23 instructs the log manager section 24 and the buffer manager section 25 to perform read from or write into a block. The SQL execution section 23 can process standard SQL statements and five instructions concerning pair operation instruction in remote copy. The five instructions concerning pair operation instruction indicate a "Paircreate" for performing a pair formation, a "Pairdisplay" for displaying a pair status, a "Pairsuspend" for suspending a remote copy between the components of a pair, a "Pairresync" for resuming a suspended remote copy and resynchronizing a pair and a "Pairdelete" for deleting a pair.

When the "Pairdelete" is performed, the "Pairsuspend" is first performed so that the remote copy is suspended. Then, the SQL execution section 23 transmits an instruction for deleting a target block, from the host 2A to the storage device 3A. Then, the storage device 3A deletes the information of the concerned block from the pair status management table 48. Processing for the "Paircreate," the "Pairdisplay," the "Pairsuspend," and the "Pairresync" is described later. The log manager section 24 processes read and write (page-in/page-out) between the log buffer 28 and the block in the storage device 3A. The buffer manager section 25 processes read and write (page-in/page-out) between the table buffer 29 and the storage data area in the storage device 3A.

The buffer management queue 26 contains a free queue 31, a dirty queue 32 and a clean queue 33. The free queue 31, the dirty queue 32 and the clean queue 33 perform page management of the table buffer 29. That is, the free queue 31, the dirty queue 32 and the clean queue 33 manage page information in the form connected through a two-way link in each queue. Every page is managed in any one of these three. The queue of the two-way link is constructed from a queue entry containing: a pointer indicating the subsequent queue entry (a node for managing the page information), a pointer indicating the preceding queue entry and the address of a page on the table buffer 29 managed by the concerned queue entry. The data structure for managing the queue may be a one-way link other than the two-way link, as well as another method.

The free queue 31 manages unused pages where contents are not read from blocks. The pages managed in the free queue 31 can be used as are. Even when used newly, these pages do not require writing into the blocks.

The dirty queue 32 is a queue containing pointers to pages the contents of which have been changed after the contents had been read from the blocks. The pages managed in the dirty queue 32 are those that require writing into the blocks.

The clean queue 33 is a queue containing pointers to pages the contents of which have not completely been changed after the contents had been read from the blocks. The pages managed in the clean queue 33 do not require writing into the blocks.

The pages managed in the free queue 31, the dirty queue 32 and the clean queue 33 transit mutually.

First, when a page is read from the storage device 3A into the table buffer 29, the read page transits from the management of the free queue 31 to the management of the clean queue 33. When the data in the table buffer 29 is discarded, the page having recorded the data transits from the management of the clean queue 33 to the management of the free queue 31.

When a page is read from the storage device 3A into the table buffer 29 and then its contents are updated, the page transits from the management of the free queue 31 to the management of the dirty queue 32. After that, when the data in the table buffer 29 is written into the storage device 3A and then the data is discarded, the page having recorded the data transits from the management of the dirty queue 32 to the management of the free queue 31.

When data in the table buffer 29 is written into the storage device 3A, the page having recorded the data transits from the management of the dirty queue 32 to the management of the clean queue 33. After that, when the data in the table buffer 29 is updated, the page having recorded the data transits from the management of the clean queue 33 to the management of the dirty queue 32.

The DB address-block address conversion table 27 is a table for converting an address where a table of the database is retained in the host 2A into a block address of a storage data area storing the contents in the storage device 3A. An example of the configuration of the DB address-block address conversion table 27 is described later.

The log buffer 28 is an area of the memory 34 for storing the log of SQL statements executed by the SQL execution section 23 as database instructions for the DB server 21. For example, when an UPDATE statement and a COMMIT statement have been performed at the preceding stage, a log of the UPDATE statement is recorded in the log L1 of FIG. 2, while a log of the COMMIT statement is recorded in the log L2.

The log buffer 28 may be managed in the form of a ring buffer other than a queue of a two-way link. In the form of a ring buffer, the buffer area is used successively starting at the starting address of the log buffer 28. When the address reaches the ending address of the log buffer 28, pages are reused after returning to the starting address.

The table buffer 29 is a buffer for recording a table of the database. As shown in FIG. 2, the table buffer 29 records the table by the page unit and manages the pages using the buffer management queue 26. The table mentioned here is stored in the pages P1 and P2 of the table buffer 29 shown in FIG. 2.

At the level of the buffer of the DB server 21, the table is managed by the queue by the page unit. Read and write for the buffer are performed also in a page unit. Here, Read/Write requests to the storage can be specified by the block unit except for the case of a main frame (Read/Write requests can be specified by the byte unit in main frames). Thus, because of the above-mentioned feature of the DB server 21, Read/Write instructions in the page size are converted and issued in the form of a block address. However, this situation does not hold for the log buffer. That is, read and write may be performed by the block unit.

### (Configuration of Storage Device)

The storage device 3A comprises a disk controller 42 and three disk devices 44A, 44B and 44C. The disk devices 44A, 44B and 44C may be treated, for example, as a single logical disk 45 under the management of the disk controller 42. The number of disk devices and the number of logical disks may be changed.

The disk controller 42 is a computer comprising at least a CPU 41 and a memory 43. The CPU 41 may be any type of CPU provided with a predetermined calculation. The type is not limited in a particular CPU. The memory 43 may be any type of memory such as an ordinary semiconductor memory applicable to the operation of the CPU 41. The type is not limited in a particular memory.

The memory 43 contains a remote copy program section 46, a disk array control program section 47 and a pair status management table 48.

The remote copy program section 46 is a program for performing the remote copy of a storage data area corresponding to a table of the database recorded in the disk devices 44A, 44B and 44C or the logical disk 45.

The disk array control program section 47 has the function of controlling as a disk array a plurality of the disk devices 44A, 44B and 44C connected to the disk controller 42 and thereby reconstructing these units in the form of the logical disk 45 described above. The method of controlling the disk array may be a RAID (Redundant Array of Independent Disks) or the like. However, the method is not limited to this.

The pair status management table 48 is a table for managing the status of a pair of remote copy target. In this table, information is managed that is necessary when the disk controller 42 or the storage device 3A performs remote copy.

### (Example of Configuration of Page and Log)

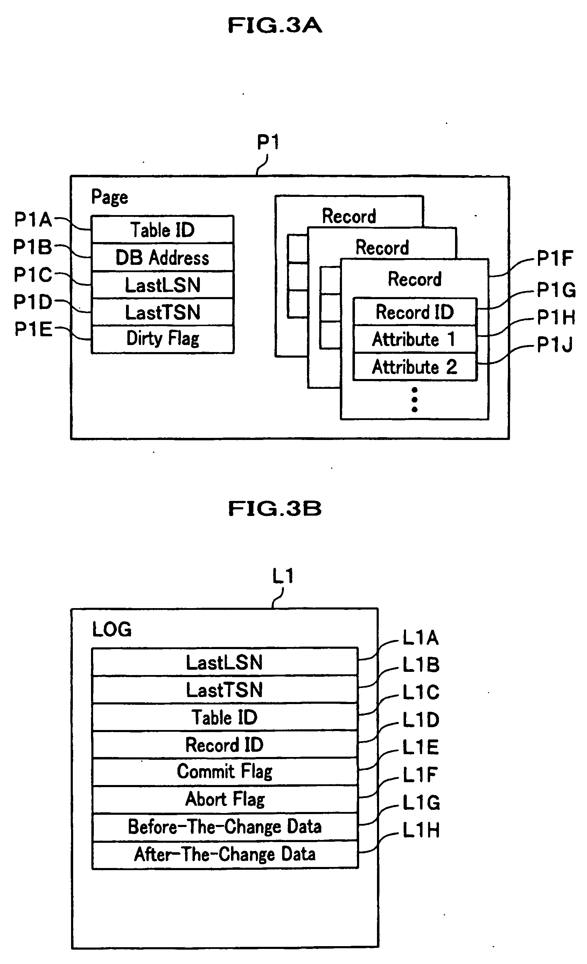

Next, the pages P1 and P2 shown in FIG. 2 and the logs L1 and L2 shown in FIG. 2 are described below with reference to FIG. 3.

As shown in FIG. 3A, the page P1 contains a table ID (reference numeral P1A), a DB address P1B, a LastLSN (Last Log Sequence Number) P1C, a LastTSN (Last Transaction Sequence Number) P1D, a dirty flag P1E and records P1F. The LastLSN and the LastTSN contain the ID of a log and the ID of a transaction, respectively. In addition, the page P2 is similar.

The table ID (P1A) is information specifying a table that contains the concerned page. The DB address P1B is information specifying a table and an address of the database to which the data present in the concerned page belongs. An example of the usage of the DB address P1B is that when the buffer manager section 25 is to write the concerned page back to the original state, a write request is issued to a storage data area specified by converting the DB address P1B using the DB address-block address conversion table 27.

The LastLSN (P1C) and the LastTSN (P1D) are identification information for the log and the transaction, respectively. The information included in these areas is almost equivalent. These areas store the identification information for the log or the transaction having used the concerned page at the preceding stage. The dirty flag P1E is a flag that indicates whether the page is dirty or not, that is, whether the contents have been varied or not after the contents had been read into the memory 34. When the dirty flag P1E is ON, the contents of the concerned page have been varied. Thus, when this page is to be removed from the buffer, the contents need be written into the block.

Each record P1F corresponds to a record of the database. A plurality of records is contained in the page P1 of the example. However, a single record may solely be contained in the page P1. As shown in FIG. 3A, the record P1F contains a record ID (P1G), the value of an attribute 1 (P1H), the value of an attribute 2 (P1J) and the like. Two attributes are shown in this example. However, a larger number of attributes may be included. The attributes mentioned here indicate the attributes in a table of the database. For example, in the case of a table containing product names and their prices, the attributes correspond to the "product name" and the "price." A value of the attribute 1 (P1H) and a value of the attribute 2 (P1J) are the data of a specific product name and a specific price.

Next, the configuration of the logs L1 and L2 are described below. As shown in FIG. 3B, the log L1 contains a LastLSN (L1A), a LastTSN (L1B), a table ID (L1C), a record ID (L1D), a commit flag L1E, an abort flag L1F, before-the-change data L1G and after-the-change data L1H. The log L2 is similar.

The LastLSN (L1A) and the LastTSN (LIB) are similar to the LastLSN (P1C) and the LastTSN (P1D) shown in FIG. 3B. The table ID (L1C) contains identification information for a table in the database which is a target of an instruction recorded in the log. The record ID (L1D) contains identification information for a record assigned as an update target in the log. Although not being described in FIG. 3B, the log L1 may contain information indicating a DB address where a record of update target is present.

The commit flag L1E is a flag indicating whether an instruction recorded in the log is a COMMIT or not. The abort flag L1F is a flag indicating whether an instruction recorded in the log is an ABORT or not.

The before-the-change data L1G and the after-the-change data L1H are data respectively containing the contents of a record before and after the change performed according to an instruction recorded in the concerned log.

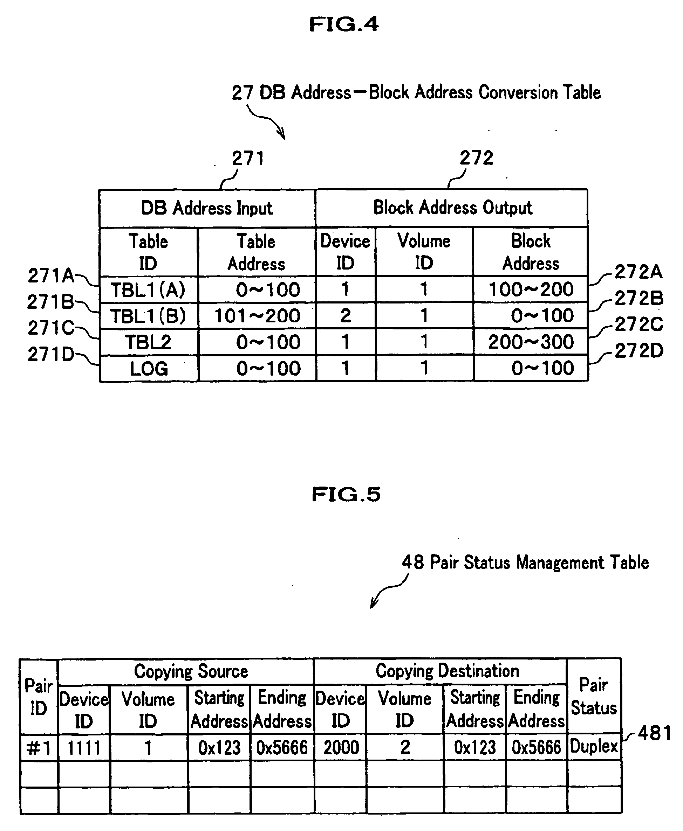

FIG. 4 is a diagram showing an example of configuration of a DB address-block address conversion table. The table shown in FIG. 4 is an example of a DB address-block address conversion table 27 of FIG. 2. Specifically, this table 27 has such a structure that a block address output 272 is obtained as a conversion result for a DB address input 271.

Each DB address input 271 comprises information on the table ID and the table address of a table in the database. Each block address output 272 contains the device ID of a storage device, the volume ID of a disk device or logical disk and a block address indicating a storage data area in the device ID and the volume ID. In FIG. 4, conversion information is shown for four entries.

In the DB address-block address conversion table 27, a single table of the database can be described as a plurality of separate entries. In FIG. 4, a DB address input 271A and a DB address input 271B correspond to a single table TBL1 of the database. In this example, the table ID of the DB address input 271A is described as "TBL1 (A), " while the table ID of the DB address input 271B is described as "TBL1 (B)" so that these two are distinguished. However, the description "TBL1" is sufficient in principle. Thus, the same table ID may be identified on the basis of difference in the table address. In FIG. 4, the DB address input 271A corresponds to a device ID 1 and a volume ID 1 in a corresponding block address output 272A. In contrast, the DB address input 271B corresponds to a device ID 2 and a volume ID 2 in a corresponding block address output 272B. As such, a single table does not necessarily correspond to a single disk device or logical disk.

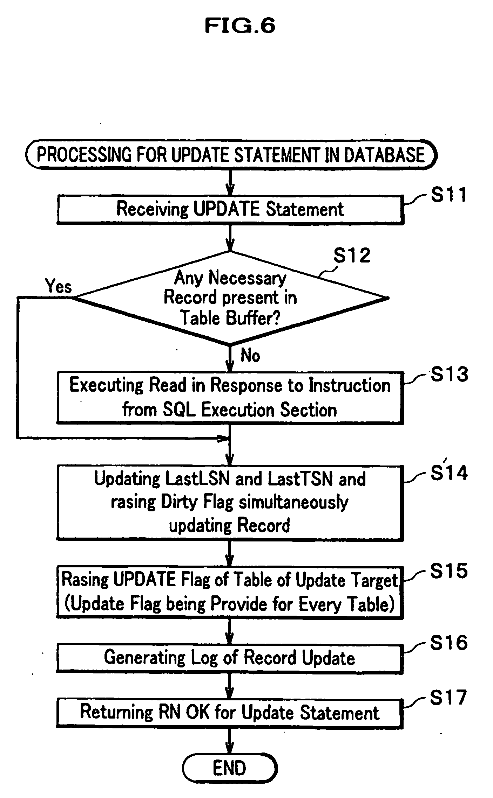

A DB address input 271C for a table TBL2 corresponds to a corresponding block address output 272C. In this case, in FIG. 4, a single table corresponds to a single disk device or logical disk. A DB address input 271D for LOG which is a log concerning table operations corresponds to a corresponding block address output 272D and corresponds to a single disk device or logical disk. FIG. 5 is a diagram showing an example of a pair status management table. This example shows the pair status management table 48 of FIG. 2. As a whole, the pair status management table 48 contains information on a pair ID, information on a copying source, information on a copying destination and information on a pair status. These pieces of information are sufficient for controlling the remote copy in the storage devices 3A, 3B, 3C and 3D. Each of the information on a copying source and the information on a copying destination described above contains a device ID, a volume ID and the starting address and the ending address of a storage data area. This allows the storage devices 3A, 3B, 3C and 3D to recognize the blocks of the copying source and the copying destination in the remote copy.

In an entry 481 shown in FIG. 5, its pair ID is #1. Further, a device ID, a volume ID, a starting address and an ending address are shown for each of a copying source and a copying destination. That is, it is meant that the pair status is Duplex. This Duplex state indicates a state that remote copy from a copying source to a copying destination is functioning normally so that the table is duplexed and that even when a failure occurs in the copying source, the system can be switched (fail over) to the copying destination. Pair statuses other than the Duplex include, for example, Simplex, Suspend and Duplex-Pending.

The Simplex state indicates an operating state similar to that of an ordinary single storage where no pair formation is performed for remote copy. Determination for these pair statuses are described later.

The Suspend indicates a state that a remote copy pair had once been formed but that the remote copy has been stopped after that owing to a certain reason. When a write operation is performed into the copying source storage device 3A (see FIG. 1) in a Suspend state, the copying source storage device 3A records into the difference bitmap the position of the write performed after the transition to the Suspend state as an area where the data contents could have been varied after the transition to the Suspend state. That is, a bit in the difference bitmap is raised in correspondence to the storage data area containing the contents in which the write has been performed.

The Duplex-Pending state indicates a state that copy is started for forming a remote copy pair so that a synchronization process is on going, that is, a state that the copy for forming a pair is in progress and hence that switching to the copying destination (fail over) cannot be performed. When a Paircreate is received for a storage data area in a Simplex state, or alternatively when a Pairresync is received for a storage data area in a Suspend state, these states transit to a Duplex-Pending state. When the copy for forming a pair has been completed, the Duplex-Pending state transits to a Duplex state.

### [Operation of Remote Copy System]

Next, the operation of the remote copy system 1 is described below. In the remote copy system 1, the host 2A issues a pair operating instruction such as a pair formation instruction. Then, the storage device 3A operates according to the received instruction. Processing performed in correspondence to each instruction is described below one by one.

FIG. 6 is a diagram showing processing for an UPDATE statement in the database.

First, the DB server 21 receives an UPDATE statement (an updating instruction in SQL) (S11). Then, the DB server 21 determines whether any necessary record is present in the table buffer29 (see FIG. 2) ornot (S12). As a result of determination, when no necessary record is present ("No" at S12), the buffer manager section 25 in the DB server 21 reads a record in response to an instruction from the SQL execution section 23 (S13). Then, the procedure goes to step S14. In contrast, at S12, when a necessary record is present ("Yes" at S12), the procedure goes directly to step S14.

At step S14, the SQL execution section 23 updates the LastLSN and the LastTSN and raises the dirty flag P1E (see FIG. 3A) (S14).

Then, the SQL execution section 23 raises the update flag of the table of update target (S15). Here, an update flag is provided for every table. Then, the SQL execution section 23 generates a log of the update of the record (S16) and then returns an OK for the UPDATE statement (S17). Then, the procedure is completed.

In FIG. 6, an UPDATE statement among SQL statements has been described as an example. However, almost the same processing is performed even for a statement such as an INSERT statement requiring a write of a record. When a statement not requiring a write of a record is performed, step S15 is unnecessary. However, almost the same processing is performed on the other points. The cases of a COMMIT statement and an ABORT statement are described later.

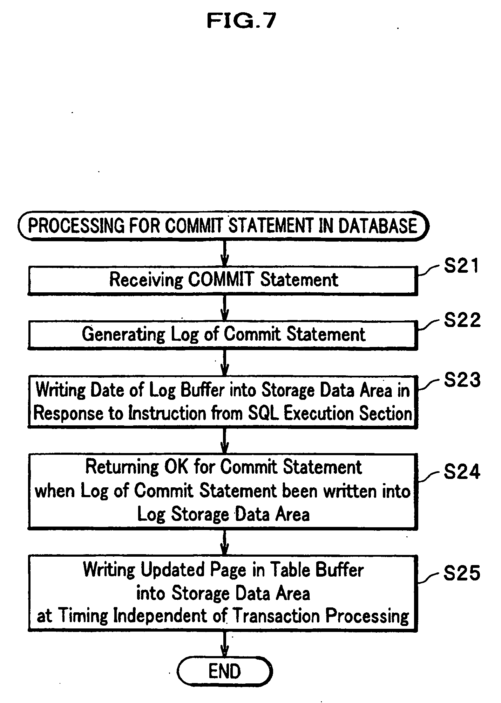

FIG. 7 is a diagram showing processing for a COMMIT statement in the database. This processing is performed subsequently to the processing of FIG. 6 or the like in many cases.

First, the DB server 21 receives a COMMIT statement (an instruction in SQL for realizing an update and the like) (S21). Then, the DB server 21 generates a log of the COMMIT statement (S22). Then, in response to an instruction from the SQL execution section 23, the log manager section 24 writes the data of the log buffer 28 into the storage data area where the log is stored (S23). When the log of the COMMIT statement has been written into the log storage data area, the SQL execution section 23 returns an OK for the COMMIT statement to the buffer manager section 25 (S24).

Then, at a timing independent of such transaction processing, the buffer manager section 25 writes the updated page on the table buffer 29 into the storage data area where the table is stored (S25). Then, the procedure is completed.

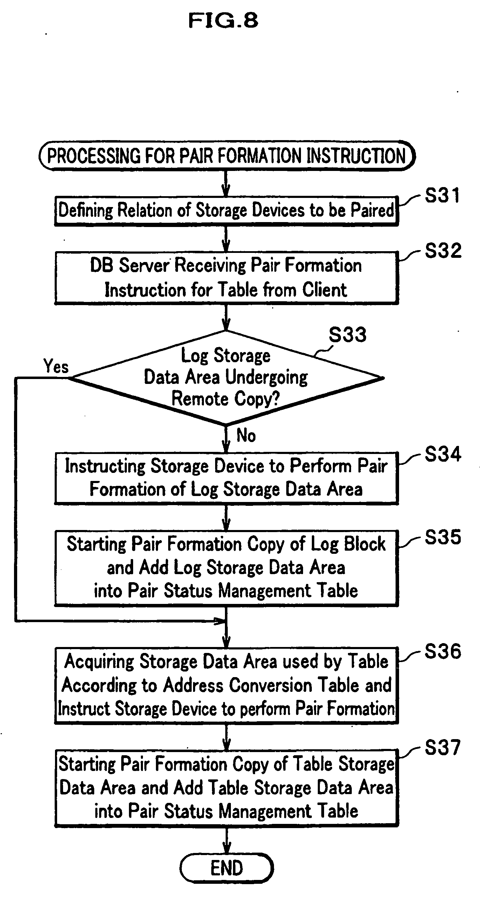

FIG. 8 is a diagram showing processing for a pair formation instruction. The pair formation instruction is the similar to the Paircreate statement described above.

First, the DB server 21 defines the relation of the storage device 3A (S31). This defines a pair for performing remote copy and defines, on the host 2A, which host and which storage device constitute a computer system for managing a copying source database and which host and which storage device constitute a computer system for managing a copying destination database. For example, in the configuration shown in FIG. 1, a pair is defined such that the host 2A and the storage devices 3A and 3B constitute a copying source and that the host 2B and the storage devices 3C and 3D constitute a copying destination.

Then, the DB server 21 receives a pair formation instruction for the table from a client (S32). The client mentioned here indicates a computer that requests the execution of an SQL statement to the DB server 21. Thus, the client may be the host 2A or 2B itself, or alternatively be another computer via a network, to access DB server 21.

Then, the SQL execution section 23 determines whether the log storage data area (a storage data area in the storage device in which the log is stored) undergoes remote copy or not (S33). This can be checked when a pair status reference instruction (Pairdisplay) is executed with respect to the log storage data area.

As a result of determination, when the log storage data area undergoes remote copy ("Yes" at S33), the procedure goes directly to step S36. In contrast, when the log storage data area does not undergo remote copy ("No" at S33), the host 2A instructs the storage device 3A to perform pair formation of the log storage data area (S34). Then, the storage device 3A starts pair formation copy of the log storage data area and then adds the log storage data area into the pair status management table 48 (S35). After that, the procedure goes to step S36.

At step S36, the host 2A acquires the storage data area (a table storage data area, hereinafter) in the storage device used by the table, according to the DB address-block address conversion table 27 and then instructs the storage device 3A to perform the pair formation (S36). Then, the storage device 3A starts pair formation copy of the table storage data area and then adds the table storage data area into the pair status management table 48 (S37). Then, the procedure is completed. At the time that the process of this pair formation has been completed, the pair status is in a Duplex-Pending state. Further, the entire information necessary in the pair status management table is provided at step S35 through step S37. However, the information may be provided at the execution of step S31.

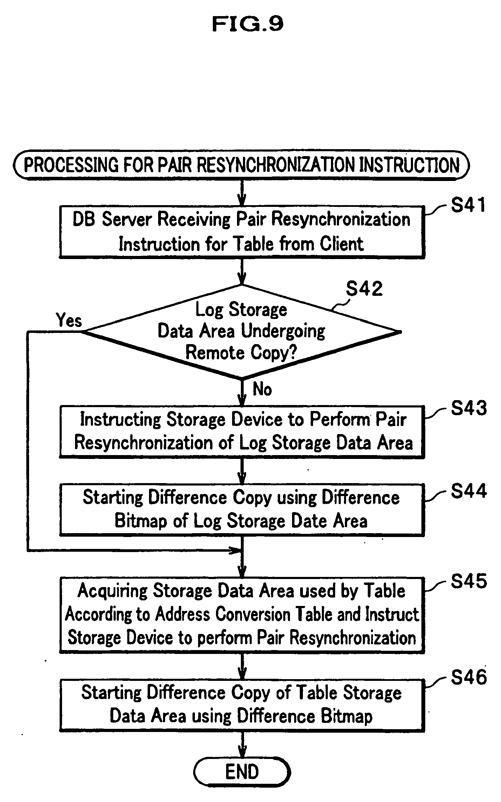

FIG. 9 is a diagram showing processing for a pair resynchronization instruction. The pair resynchronization instruction is the same as the Pairresync statement described above.

In this processing, the DB server 21 first receives a pair resynchronization instruction for the table from the client (S41). Then, the DB server 21 determines whether the log storage data area undergoes remote copy or not (S42). As a result of the determination, when the log storage data area undergoes remote copy ("Yes" at S42), the procedure goes directly to step S45. In contrast, when the log storage data area does not undergo remote copy ("No" at S42), the DB server 21 instructs the storage device 3A to perform pair resynchronization of the log storage data area (S43). Then, difference copy is started using the difference bitmap of the log storage data area (S44). After that, the procedure goes to step S45. The difference bitmap used here is a difference bitmap obtained by performing a logical sum (OR) operation on the difference bitmap recorded in the copying source storage device 3A and the difference bitmap recorded in the copying destination storage device 3C and then merging the result.

At step S45, the storage data area used by the table is acquired from the DB address-block address conversion table 27 and then the storage device 3A is instructed to perform a pair resynchronization instruction. Then, difference copy of the table storage data area is started using the difference bitmap (S46). Then, the procedure is completed.

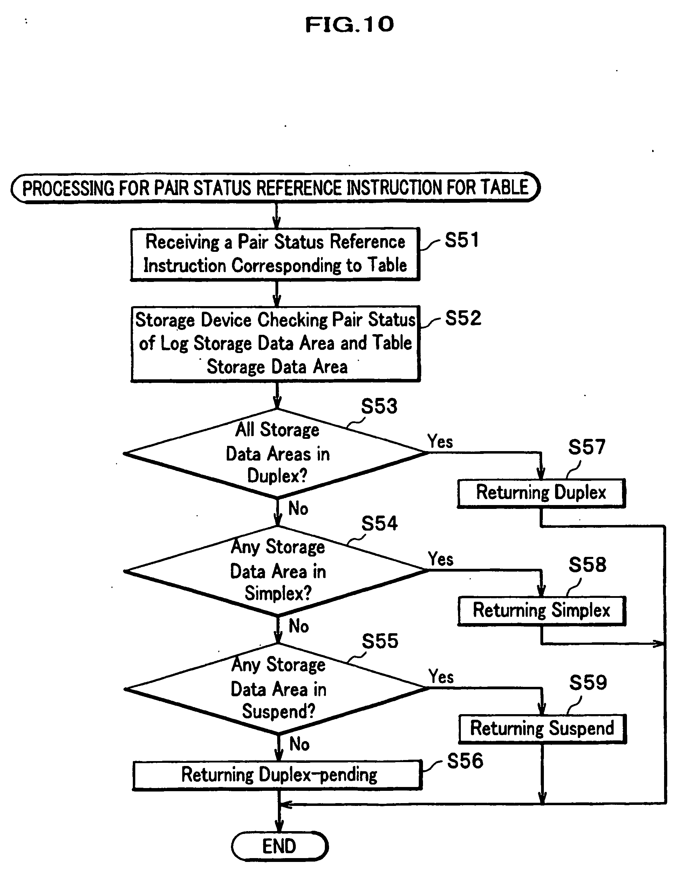

FIG. 10 is a diagram showing processing for a pair status reference instruction for the table. The pair status reference instruction is similar to the Pairdisplay statement described above. This instruction is used, for example, in the monitoring of whether the remote copy is performed normally, or in the determination of whether the copying destination is in a Duplex state as a result of the formation copy or the difference copy.

First, the DB server 21 receives a pair status reference instruction corresponding to the table (S51). Then, the storage device 3A checks the pair status of the log storage data area and the table storage data area (S52). At this step, the information of the DB address-block address conversion table 27 may be used in acquiring the log storage data area and the table storage data area. However, another method may be used. An example of the method is that an identifier is returned to the DB server 21 as a response to the pair formation instruction for the storage device and that the DB server stores this identifier and specifies this identifier in the subsequent pair operations for the storage data area.

Then, it is determined whether all storage data areas in the table are in a Duplex state (paired state) or not (S53). As a result, when all are in a Duplex state ("Yes" at S53), a Duplex state is returned (S57). Then, the procedure is completed. When not all storage data areas are in a Duplex state ("No" at S53), the procedure goes to step S54.

At step S54, it is determined whether any storage data area among the entirety of the storage data areas in the table is in a Simplex state (unpaired state) or not. As a result of the determination, when any storage data area is in a Simplex state ("Yes" at S54), a Simplex state is returned (S58). Then, the procedure is completed. When no storage data area is in a Simplex state ("No" at S54), the procedure goes to step S55.

At step S55, it is determined whether any storage data area among the entirety of the storage data areas in the table is in a Suspend state or not. As a result, when any storage data area is in a Suspend state ("Yes" at S55), a Suspend state is returned (S59). Then, the procedure is completed. When no storage data area is in a Suspend state ("No" at S55), a Duplex-pending state (pair-formation waiting state) is returned (S56). Then, the procedure is completed.

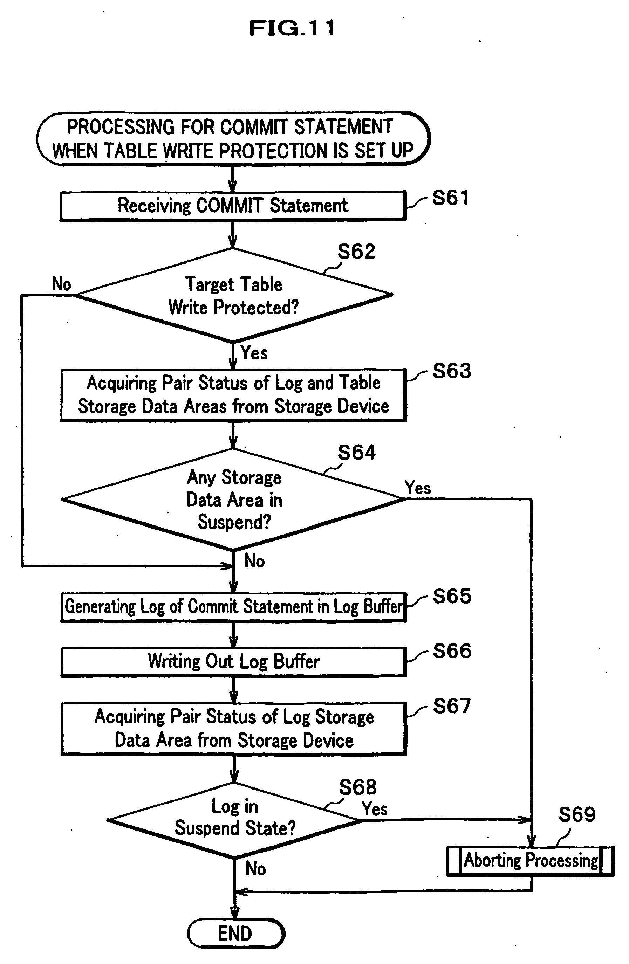

FIG. 11 is a diagram showing processing for a COMMIT statement in a case where table write protection is set up. This process is performed usually after a write instruction for the table buffer 29 is performed. Specifically, this process is assumed to be performed, for example, in a state preceded by the processing for an UPDATE statement described in FIG. 6.

In this processing, the DB server 21 first receives a COMMIT statement (S61). Then, it is checked whether the table of writing target or updating target is a write protection target or not (S62).

When write protection is not set up ("No" at S62), the procedure goes directly to step S65. When write protection is set up ("Yes" at S62), the pair status of the log and table storage data areas is acquired from the storage device 3A (S63). Then, it is checked whether any storage data area is in a Suspend state or not (S64). As a result, when any storage data area is in a Suspend state ("Yes" at S64), an abort processing is performed (S69). Then, the procedure is completed. Details of the abort processing of step S69 are described later. When no storage data area is in a Suspend state ("No" at S64), the procedure goes to step S65.

At step S65, a log of the COMMIT statement is generated in the log buffer 28. Then, the log buffer 28 is written out (S66). That is, the contents of the log buffer 28 rewritten at step S65 are recorded into the storage device 3A.

After that, the pair status of the log storage data area is acquired from the storage device 3A (S67). Then, it is checked whether the log storage data area is in a Suspend state or not (S68). In case of a Suspend state ("Yes" at S68), abort processing is performed (S69). Then, the procedure is completed. In a case other than a Suspend state ("No" at S68), the procedure is completed immediately. When "No" at S62 is obtained, S68 always selects "No".

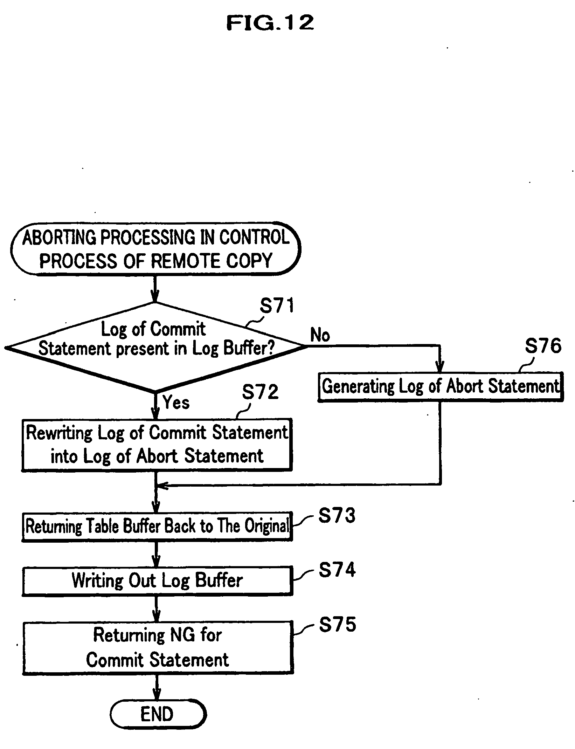

FIG. 12 is a diagram showing the abort processing in a control process of remote copy. This process is a detailed processing of step S69 shown in FIG. 11.

In this processing, it is checked first whether a log of a COMMIT statement is present in the log buffer 28 or not (S71). When a log of a COMMIT statement is present ("Yes" at S71), the log of a COMMIT statement is rewritten into a log of an abort statement (S72). Then, the procedure goes to step S73. When no log of a COMMIT statement is present ("No" at S71), a log of an abort statement is generated (S76). Then, the procedure goes to step S73.

At step S73, according to the contents (such as the before-the-update data L1G of FIG. 3B) recorded in the log, the table buffer 29 is returned back to the original state. Then, the log buffer 28 is written out to the storage device 3A (S74). Then, an NG (indicating that the COMMIT has not been processed normally) for the COMMIT statement is returned (S75). Then, the procedure is completed.

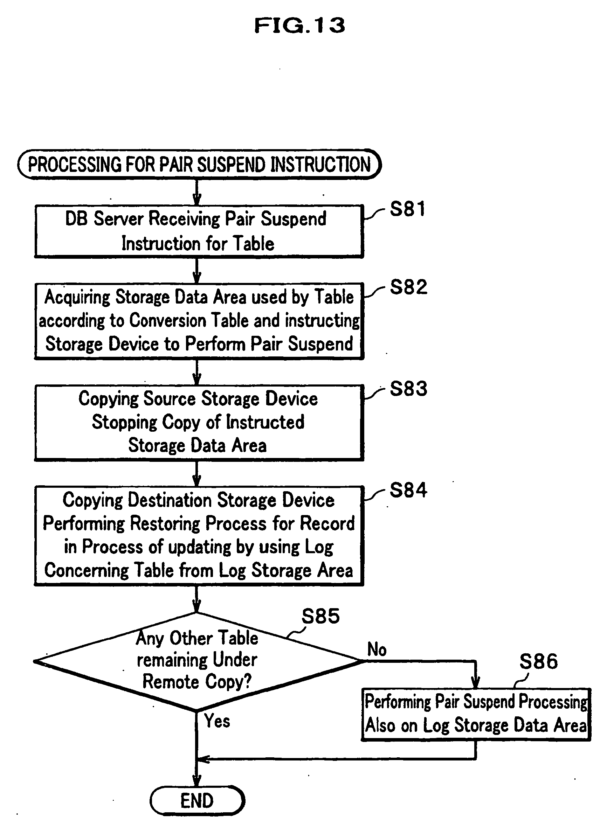

FIG. 13 is a diagram showing a processing for a pair suspend instruction. The pair suspend instruction is the same as the Pairsuspend statement described above.

In this processing, the DB server 21 first receives a pair suspend instruction for the table (S81). Then, the storage data area used by the table is acquired from the DB address-block address conversion table 27 and then the storage device 3A is instructed to perform pair suspend (S82). In response to this instruction, the copying source storage device 3A (see FIG. 1) stops the copy of the instructed storage data area (S83).

Then, using the log concerning the table obtained from the log storage data area, the copying destination storage device 3C (see FIG. 1) performs a restoring process for the record in the process of updating (S84). The restoring process mentioned here is similar to the abort processing in the database described in FIG. 12 and indicates such processing that the contents of a record of a transaction where a COMMIT statement is not performed are returned back to the original state such that the data in the process of updating should not remain. That is, in this processing, the execution of the instruction sentence is successively traced back using the before-the-update data (corresponding to L1G of FIG. 3B) stored in the log storage data area, so that the contents are returned back (rollback) to the state having been generated immediately after the execution of the last performed COMMIT statement.

In the rollback processing, in the copying destination storage device 3C, a write process using the before-the-update data is performed in order to restore the contents of the record. Thus, the data of the copying destination storage device 3C is changed in the course of the processing in some cases. Thus, also in the copying destination storage device 3C, similarly to the case of the copying source storage device 3A, the write position after a Suspend state is recorded in the difference bitmap. Further, the write position in the write process performed in the rollback processing is also recorded in the difference bitmap.

Furthermore, in the present embodiment, the restoring process is assumed to be performed by the copying destination host 2B (see FIG. 1). However, the copying destination storage devices 3C and 3D may have the function of treating the database so as to perform the restoring process.

Then, the DB server 21 checks whether any other table remains under remote copy or not (S85). When no such table is present ("No" at S85), pair suspend processing is performed also on the log storage data area (S86). Then, the procedure is completed. When such a table remains ("Yes" at S85), the DB server 21 does not provide a Suspend instruction and the procedure is completed in a state that the remote copy of the log storage data area is continued by the storage devices 3A and 3C.

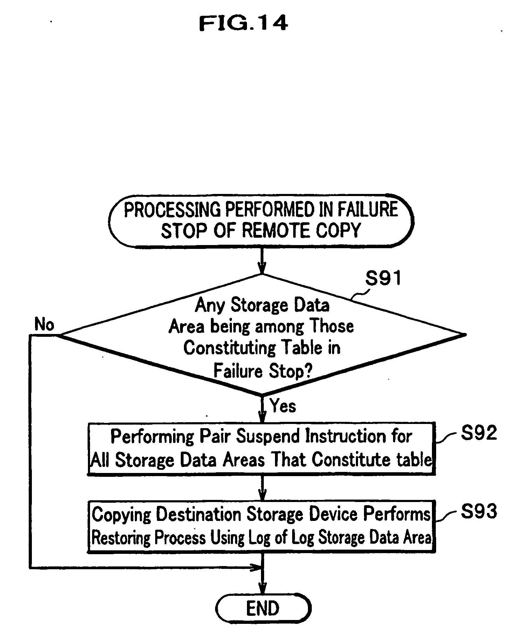

FIG. 14 is a diagram showing a process performed in the case of failure stop of remote copy.

In this process, it is checked first whether any storage data area among those constituting the table is in failure stop or not (S91). When no such storage data area is present ("No" at S91), the procedure is completed directly. When any storage data area is in failure stop ("Yes" at S91), a pair suspend instruction is performed for all the storage data areas that constitute the table (S92). Then, the copying destination storage device 3C performs a restoring process using the log in the log storage data area (S93). Then, the procedure is completed. The restoring process performed here is similar to that described above.

Thus, according to the first embodiment, the host computer 2A defines a pair formation between the first storage device 3A serving as a copying source and the second storage device 3C serving as a copying destination according to an instruction provided in advance, then generates a conversion table 27 for performing address conversion from a table and a log of a database serving as a definition target of the formed pair to a storage data area corresponding to the table and the log in the first storage device 3A and then instructs the first storage device 3A to perform the defined pair formation using the generated conversion table 27. In response to the instruction from the host computer 2A, the first storage device 3A generates in the pair status management table 48 the pair relation between the copying source and the copying destination.

According to this configuration, in response to an instruction from the host 2A, pair formation is performed between the copying source storage device 3A and the copying destination storage device 3C so that remote copy becomes possible.

Further, according to the first embodiment, depending on the pair formation status of the table and the log, the first storage device 3A updates the pair status management table 48 and then performs remote copy of data of copying target into the second storage device 3C serving as a copying destination.

This configuration allows the remote copy to be performed between the copying source storage device 3A and the copying destination storage device 3C.

Further, according to the first embodiment, when the amount of data of the table increases, the host 2A and the first storage device 3A newly allocates a storage data area corresponding to the table, then defines in the pair status management table 48 a pair formation of the newly allocated data area and then performs remote copy of data of copying target into the second storage device 3C serving as a copying destination.

This configuration allows the remote copy system 1 to handle automatically a size increase in the table of the database.

Further, according to the first embodiment, in a case where remote copy of a table specified as the host computer 2A is suspended and that the data changed by a non-completed transaction is restored using information of the log of the concerned table, the second storage device 3C raises a bit in a difference bitmap indicating a difference between data of the concerned second storage device 3C and the first storage device 3A with respect to the concerned restored data.

This configuration allows the remote copy to be suspended in a resumable state.

Further, according to the first embodiment, using the formed difference bitmap, the first storage device 3A realizes in the second storage device 3C a data update performed after the remote copy suspend and then resumes the remote copy of the specified table.

According to this configuration, a change performed in the copying source during the suspend is realized in the copying destination and then the suspended remote copy is resumed.

Further, according to the first embodiment, the first storage device 3A checks the pair status of the storage data area corresponding to the log and the table. Then, when the storage data area corresponding to the log and the table is duplexed, the device returns this status. When the storage data area corresponding to the log and the table is not a duplex target, the device returns this status. When duplex of the storage data area corresponding to the log and the table is suspended, the device returns this status. Further, when the storage data area corresponding to the log and the table is at a preparatory stage for performing copy for duplex, the device returns this status.

This configuration allows the state of the remote copy to be determined when necessary.

This configuration permits a remote copy operation for operating the data treated in a specific application, which was not easy in the prior art. Specifically, when remote copy is performed by the table unit of a database, finely tuned setting for the duplex is allowed. Further, the setting is performed not at an operating system level of the computer but by using the instruction sentences added to the SQL language of the database management system. By virtue of this, even a database administrator inexperienced in the management of a computer can set up and manage the duplex.

Further, a storage device performs the remote copy. Thus, the remote copy is performed almost without a load to the host. Accordingly, duplex is achieved without degrading the processing speed of the host. This permits the construction of a stable and reliable system.

### [Second Embodiment]

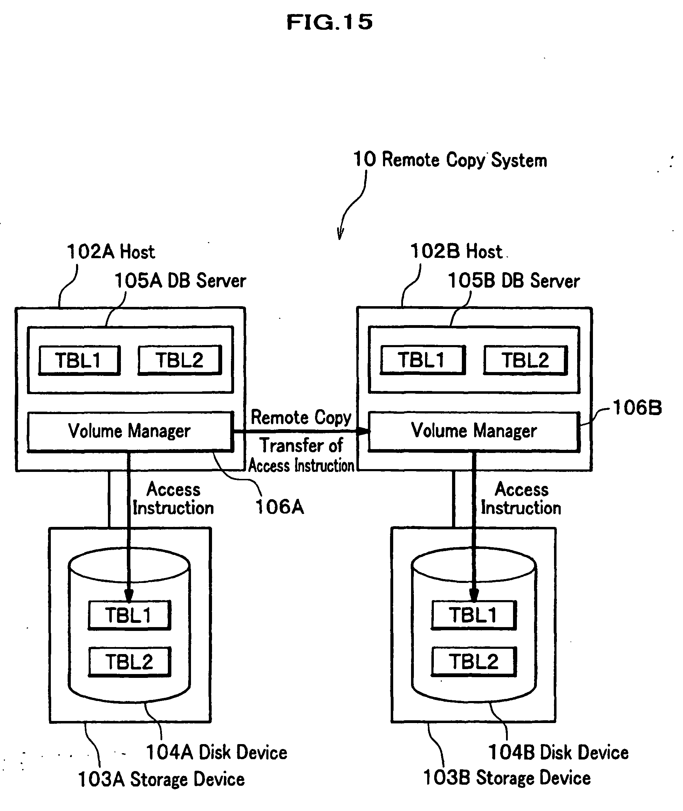

FIG. 15 is a diagram showing the overall configuration including a remote copy system according to a second embodiment. A feature of the second embodiment different from the first embodiment is that hosts 102A and 102B perform remote copy instead of storage devices 103A and 103B. On the other points, the overall configuration including a remote copy system 10 is nearly the same as the first embodiment. However, in contrast to the first embodiment, the copying destination host 102B is an indispensable component. The storage device 103A in the second embodiment need not be of a type that supports remote copy.

As shown in FIG. 15, the remote copy system 10 comprises the copying source host 102A, the copying source storage device 103A, the copying destination host 102B and the copying destination storage device 103B. The copying source host 102A and the copying destination host 102B include DB servers 105A and 105B and volume managers 106A and 106B, respectively. The storage devices 103A and 103B include disk devices 104A and 104B, respectively. The number of disk devices included in the storage devices 103A and 103B is not finite and may be arbitrary.

In contrast to the first embodiment where the storage devices 3A, 3B, 3C and 3D have retained a remote copy program and a pair status management table, the program and the table are retained in volume managers 106A and 106B of the hosts 102A and 102B in the present embodiment. The other points in basic operation and configuration are almost the same as those of the first embodiment. Thus, different points from the first embodiment are stressed in the following description.

In the second embodiment, remote copy is achieved when an access instruction issued from the volume manager 106A to the storage device 103A is executed and when the same access instruction is transferred from the volume manager 106A of the copying source host 102A to the copying destination host 102B.

For example, when the copying source host 102A issues a SCSI write instruction as an access instruction to the storage device 103A, the volume manager 106A transmits the SCSI instruction to the storage device 103A and at the same time transmits the same access instruction also to the copying destination volume manager 106B. Then, the copying destination volume manager 106B transmits intact the received access instruction to the storage device 103B or alternatively transmits an instruction to the storage device 103B after converting the received instruction appropriately in accordance with the situation of the storage data area of the copying destination storage device 103B. As a result, when no conversion is performed, duplex is performed at the exactly same address in the copying source and in the copying destination. Further, when the conversion is performed, duplex is performed similarly, although the storing address is different between the copying source and the copying destination.

The present embodiment has been described for the case where the volume managers 106A and 106B take the initiative in performing the remote copy. However, a file system may take the initiative. In this case, the file system includes a mechanism for performing remote copy, a mechanism for managing a specific area (corresponding to a block) in the file and data corresponding to the pair status management table.

As such, according to the second embodiment, even when storage devices not provided with a special mechanism are used, block duplex is achieved by means of remote copy corresponding to the table of a database. Further, hosts composed of an ordinary computer may be used so as to construct an inexpensive remote copy system.

The embodiments of the invention can be modified without departing from the scope of the invention as set out in the claims.

## Claims

1. A remote copy system (1) comprising a host computer (2A) and a first storage device (3A) in which data update is performed to said host computer, wherein
said host computer defines a pair formation between said first storage device (3A) serving as a copying source and a second storage device (3C) serving as a copy destination, according to an instruction provided in advance, **characterised in that**:
said host computer has a database server (21), and is arranged to:
execute said database server and manage a plurality of tables and a conversion table (27), both included in the database server (21), the conversion table (27) storing relations between said tables and locations of data areas in the first storage device (3A) for said tables,
when receiving a remote copy instruction specifying at least one of said tables:
specify said table;
acquire locations of data areas in the first storage device (3A) for said specified table and a log used by said specified table, according to said conversion table (27); and
instruct the first storage device (3A) to perform remote copy of said data area of said locations of said specified table and said log, and further **characterised in that**:
said first storage device (3A) is arranged to:
perform said remote copy from the first storage device (3A) to the second storage device (3C) regarding said data area of said locations, and
generate in a pair status management table (48) said defined pair relation between said copying source and said copying destination in response to the host computer (2A) that has received the remote copy instruction specifying said table.

2. A remote copy system according to claim 1, wherein said first storage device (3A) updates said pair status management table (48) depending on said pair formation status of said table and said log.

3. A remote copy system according to claim 2, wherein said first storage device (3A), when an amount of data of said table increases, newly allocates a data area corresponding to said table, defines in said pair status management table (48) a pair formation of said newly allocated data area and then performs remote copy of data of copying target into said second storage device (3C) serving as a copy destination.

4. A remote copy system according to claim 3, wherein said second storage device (3C), in a case when remote copy of a table specified by said host computer (2A) is suspended and data having been changed in a non-completed transaction is restored using information of said log of said concerned table, raises a bit in a difference bitmap indicating a difference between data of said concerned second storage device and said first storage device with respect to said concerned restored data.

5. A remote copy system according to claim 4, wherein said first storage device (3A) realizes into said second storage device (3C) a data update performed after said remote copy suspend using said formed difference bitmap and then resumes said remote copy of said specified table.

6. A remote copy system according to claim 5, wherein said first storage device (3A) checks a pair status of data area corresponding to said log and said table wherein said first storage device returns each status thereof in each case such that said data area corresponding to said log and said table is duplexed, that said data area corresponding to said log and said table is not a duplex target, that duplex of said data area corresponding to said log and said table is suspended and that said data area corresponding to said log and said table is at a preparatory stage for performing copy for duplex.

7. A remote copy system according to claim 6, wherein said first storage device (3A), in a case that said table of update target is not a protection target and alternatively in a case that said table is a protection target and that duplex is not suspended, realizes update of said data area in response to an instruction for realizing an update.

8. A remote copy system according to claim 6, wherein said first storage device (3A), in a case that said table of update target is a protection target and that duplex is suspended, performs a restoring process for said data area using information of a log in response to an instruction for restoring an update.

9. A remote copy system according to claim 6, wherein said first storage device (3A), when a failure occurs in a part of areas, suspends duplex for all other areas used by said table and performs a restoring process for said data area using information of a log in said second storage device (3C) serving as a copying destination.

10. A remote copy system according to claim 6, wherein
in a case that said table of update target is not a protection target or said table is a protection target with a case that duplex is not suspended, said first storage device (3A) realizes update of said data area in response to an instruction for realizing an update and alternatively,
in a case that said table of update target is a protection target and that duplex is suspended, said first device (3A) performs a restoring process for said data area using information of log in response to an instruction for restoring an update and further when a failure occurs in a part of areas therein said first storage device (3A) suspends duplex for all other areas used by said table and said second storage device (3C) performs a restoring process for said data area using said information of said log.

11. A method for use in remote copy performed in a remote copy system (1) comprising a host computer (2A) and a first storage device (3A) in which data update is performed to and from said host computer, wherein
said host computer performs the step of:
defining a pair formation between said first storage device serving as a copying source and a second storage device (3C) serving as a copying destination, according to an instruction provided in advance, and **characterised in that**:
said host computer has a database server (21) and performs the further steps of:
executing the database server (21) and managing a plurality of tables and a conversion table (27), both included in the database server (21), the conversion table (27) storing relations between said tables and locations of data areas in the first storage device (3A) used by said tables; and
when receiving a remote copy instruction specifying at least one of said tables:
specifying said table;
acquiring locations of data areas in the first storage device (3A) for said specified table and a log used by said specified table, according to said conversion table (27); and instructing said first storage device (3A) to perform remote copy of said data area of said locations of said specified table and said log, and **in that**
said first storage device (3A) performs said remote copy from the first storage device (3A) to the second storage device (3C) regarding said data area of said locations, and
generates in a pair status management table (48) said defined pair relation between said copy source and said copy destination in response to the host computer (2A) that has received the remote copy instruction specifying said table.

12. A method according to claim 11, wherein said first storage device (3A) further performs the steps of:
updating said pair status management table (48) depending on said pair formation status of said table and said log.

13. A method for remote copy according to claim 12, wherein in said first storage device (3A), when an amount of data of said table increases, said device further performs the steps of:
newly allocating a data area corresponding to said table;
defining in said pair status management table (48) a pair formation of said newly allocated data area; and
performing remote copy of data of copying target into said second storage device (3C) serving as a copying destination.

14. A method for remote copy according to claim 13, wherein said second storage device (3C) performs a step of suspending remote copy of a table specified by said host computer and further in a case that data having been changed in a non-completed transaction is restored using information of said log of said concerned table, and said device further performs said step of raiding a bit in a difference bitmap indicating a difference between data of said concerned second storage device and said first storage device (3A) with respect to said concerned restored data.

15. A method for remote copy according to claim 14, wherein said first storage device (3A) further performs the steps of:
realizing into said second storage device (3C) a data update performed after said remote copy suspend, using said formed difference bitmap; and
resuming said remote copy of said specified table.

16. A method for remote copy according to claim 15, wherein said first storage device (3A) further performs a step of checking said pair status of said data area corresponding to said log and said table;
said device performs a step of returning a status thereof in a case that said data area corresponding to said log and said table is duplexed;
said device performs a step of returning a status thereof in a case that said data area corresponding to said log and said table is not a duplex target;
said device performs a step of returning a status thereof in a case that duplex of said data area corresponding to said log and said table is suspended; and
said device performs a step of returning a status thereof in case that said data area corresponding to said log and said table is at a preparatory stage for performing copy for duplex.

17. A method for remote copy according to claim 16, wherein in a case that said table of update target is not a protection target and alternatively in a case where said table is a protection target and that duplex is not suspended, said first storage device (3A) further performs a step of realizing said update of said data area in response to an instruction for realizing an update.

18. A method for remote copy according to claim 16, wherein in a case that said table of said update target is a protection target and that duplex is suspended, said first storage device (3A) further performs a step of performing a restoring process for said data area using said information of said log in response to an instruction for restoring an update.

19. A method for remote copy according to claim 16, wherein when a failure occurs in a part of areas, said first storage device (3A) further performs a step of suspending duplex for all other areas used by said table and further said second storage device (3C) serving as a copying destination further performs a step of performing a restoring process for said data area using said information of said log.

20. A method for remote copy according to claim 16, wherein
in a case that said table of update target is not a protection target, and alternatively in a case that said table is a protection target and that duplex is not suspended, said first storage device (3A) further performs a step of realizing update of said data area in response to an instruction for realizing an update, and
in a case that said table of update target is a protection target and that duplex is suspended, said first storage device (3A) further performs a step of performing a restoring process for said data area using said information of said log in response to an instruction for restoring an update, and
said first storage device (3A) further performs a step of suspending duplex for all other areas used by said table when a failure occurs in a part of areas, while
said second storage device (3C) further performs a step of performing a restoring process for said data area using said information of said log.

## Patentansprüche

1. Fernkopiersystem (1) mit einem Host-Computer (2A) und einer ersten Speichervorrichtung (3A), in der eine Datenaktualisierung für den Host-Computer durchgeführt wird, wobei
der Host-Computer entsprechend einer vorab gegebenen Anweisung eine Paarbildung zwischen der ersten Speichervorrichtung (3A), die als Kopierquelle dient, und einer zweiten Speichervorrichtung (3C), die als Kopierziel dient, festlegt,
**dadurch gekennzeichnet, dass**
der Host-Computer einen Datenbankserver (21) aufweist und eingerichtet ist,
den Datenbankserver zu betreiben und mehrere Tabellen und eine Umwandlungstabelle (27) zu verwalten, die beide im Datenbankserver (21) enthalten sind und von denen die Umwandlungstabelle (27) Beziehungen zwischen den Tabellen und Orten von Datenbereichen in der ersten Speichervorrichtung (3A) für die Tabellen speichert,
wenn eine mindestens eine der Tabellen bezeichnende Fernkopieranweisung empfangen wird:
die genannten Tabelle zu bezeichnen,
entsprechend der Umwandlungstabelle (27) Orte von Datenbereichen in der ersten Speichervorrichtung (3A) für die bezeichnete Tabelle und ein von der bezeichneten Tabelle verwendetes Protokoll zu gewinnen und
die erste Speichervorrichtung (3A) anzuweisen, einen Fernkopiervorgang des Datenbereichs der Orte der bezeichneten Tabelle und des Protokolls auszuführen,
weiterhin **dadurch gekennzeichnet, dass**
die erste Speichervorrichtung (3A) eingerichtet ist,
den Fernkopiervorgang von der ersten Speichervorrichtung (3A) zur zweiten Speichervorrichtung (3C) für den Datenbereich der genannten Orte auszuführen, und
in Antwort darauf, dass der Host-Computer (2A), der die Fernkopieranweisung erhalten hat, die genannte Tabelle bezeichnet, in einer Paarzustandsverwaltungstabelle (48) die festgelegte Paarbeziehung zwischen der Kopierquelle und dem Kopierziel zu erzeugen.

2. System nach Anspruch 1, wobei die erste Speichervorrichtung (3A) die Paarzustandsverwaltungstabelle (48) in Abhängigkeit vom Paarbildungszustand der genannten Tabelle und des Protokolls aktualisiert.

3. System nach Anspruch 2, wobei die erste Speichervorrichtung (3A) dann, wenn die Menge der Daten der genannten Tabelle anwächst, einen der Tabelle entsprechenden Datenbereich neu zuordnet, in der Paarzustandsverwaltungstabelle (48) eine Paarbildung für den neu zugeordneten Datenbereich festlegt und dann einen Fernkopiervorgang von Daten des Kopierobjekts in die als Kopierziel dienende zweite Speichervorrichtung (3C) ausführt.

4. System nach Anspruch 3, wobei die zweite Speichervorrichtung (3C) dann, wenn ein Fernkopiervorgang einer vom Host-Computer (2A) bezeichneten Tabelle angehalten wird und Daten, die in einer unvollendeten Transaktion geändert wurden, unter Verwendung von Informationen des Protokolls der betreffenden Tabelle wiederhergestellt werden, ein Bit in einer Unterschieds-Bitmap setzt, das einen Unterschied zwischen Daten der betreffenden zweiten Speichervorrichtung und der ersten Speichervorrichtung für die betreffenden wiederhergestellten Daten anzeigt.

5. System nach Anspruch 4, wobei die erste Speichervorrichtung (3A) in der zweiten Speichervorrichtung (3C) eine nach dem Halten des Fernkopiervorgangs ausgeführte Datenaktualisierung bewirkt, indem die gebildete Unterschieds-Bitmap verwendet wird, und dann den Fernkopiervorgang der bezeichneten Tabelle wieder aufnimmt.

6. System nach Anspruch 5, wobei die erste Speichervorrichtung (3A) einen Paarzustand für den dem Protokoll und der genannten Tabelle entsprechenden Datenbereich prüft, wobei sie seinen jeweiligen Zustand für den jeweiligen Fall zurückgibt, wie beispielsweise, dass der dem Protokoll und der Tabelle entsprechende Datenbereich verdoppelt ist, dass der dem Protokoll und der Tabelle entsprechende Datenbereich kein Verdopplungsobjekt ist, dass eine Verdopplung des dem Protokoll und der Tabelle entsprechenden Datenbereichs angehalten ist und dass sich der dem Protokoll und der Tabelle entsprechende Datenbereich in einem Vorbereitungszustand zur Ausführung eines Kopiervorgangs für die Verdopplung befindet.

7. System nach Anspruch 6, wobei die erste Speichervorrichtung (3A) im Fall, dass die Tabelle des Aktualisierungsobjekts kein geschütztes Objekt ist, und andererseits im Fall, dass die Tabelle ein geschütztes Objekt ist und eine Verdopplung nicht angehalten ist, in Antwort auf eine Anweisung zum Bewirken einer Aktualisierung eine Aktualisierung des Datenbereichs bewirkt.

8. System nach Anspruch 6, wobei die erste Speichervorrichtung (3A) im Fall, dass die Tabelle des Aktualisierungsobjekts ein geschütztes Objekt ist und eine Verdopplung angehalten ist, in Antwort auf eine Anweisung zum Wiederherstellen einer Aktualisierung einen Wiederherstellungsprozess für den Datenbereich unter Verwendung eines Protokolls ausführt.

9. System nach Anspruch 6, wobei die erste Speichervorrichtung (3A) dann, wenn in einem Teilbereich ein Fehler auftritt, eine Verdopplung für alle anderen von der Tabelle verwendeten Bereiche anhält und für den Datenbereich einen Wiederherstellungsprozess unter Verwendung von Informationen eines Protokolls in der als Kopierziel dienenden zweiten Speichervorrichtung (3C) ausführt.

10. System nach Anspruch 6, wobei
die erste Speichervorrichtung (3A) im Fall, dass die Tabelle des Aktualisierungsobjekts kein geschütztes Objekt ist oder die Tabelle ein geschütztes Objekt ist, wobei eine Verdopplung nicht angehalten ist, in Antwort auf eine Anweisung zum Bewirken einer Aktualisierung eine Aktualisierung des Datenbereichs bewirkt und andererseits
die erste Vorrichtung (3A) im Fall, dass die Tabelle des Aktualisierungsobjekts ein geschütztes Objekt ist und eine Verdopplung angehalten ist, in Antwort auf eine Anweisung zum Wiederherstellen einer Aktualisierung einen Wiederherstellungsprozess für den Datenbereich unter Verwendung von Informationen des Protokolls ausführt, und außerdem dann, wenn ein Fehler in einem Teilbereich darin auftritt, die erste Speichervorrichtung (3A) eine Verdopplung für alle anderen von der Tabelle verwendeten Bereiche anhält und die zweite Speichervorrichtung (3C) einen Wiederherstellungsprozess für den Datenbereich unter Verwendung der Informationen des Protokolls ausführt.

11. Verfahren zur Verwendung in einem Fernkopiervorgang, der von einem Fernkopiersystem (1) ausgeführt wird, das einen Host-Computer (2A) und eine erste Speichervorrichtung (3A) aufweist, in der von und zum Host-Computer eine Datenaktualisierung ausgeführt wird, wobei
der Host-Computer folgenden Schritt ausführt:
Festlegen einer Paarbildung zwischen der als Kopierquelle dienenden ersten Speichervorrichtung und einer als Kopierziel dienenden zweiten Speichervorrichtung (3C) entsprechend einer vorab gegebenen Anweisung,
**dadurch gekennzeichnet, dass**
der Host-Computer einen Datenbankserver (21) aufweist und folgende weitere Schritte ausführt:
Betreiben des Datenbankservers (21) und Verwalten mehrerer Tabellen sowie einer Umwandlungstabelle (27), die beide im Datenbankserver (21) enthalten sind und von denen die Umwandlungstabelle (27) Beziehungen zwischen den Tabellen und Orten von Datenbereichen in der ersten Speichervorrichtung (3A) speichert, die von den Tabellen verwendet werden, und
wenn eine mindestens eine der Tabellen bezeichnende Fernkopieranweisung empfangen wird:
Bezeichnen der genannten Tabelle,
Gewinnen von Orten von Speicherbereichen in der ersten Speichervorrichtung (3A) für die bezeichnete Tabelle und ein von der bezeichneten Tabelle verwendetes Protokoll gemäß der Umwandlungstabelle (27), und
Anweisen der ersten Speichervorrichtung (3A), einen Fernkopiervorgang für den Datenbereich der Orte der bezeichneten Tabelle und des Protokolls auszuführen, und
**dadurch**, dass
die erste Speichervorrichtung (3A) den Fernkopiervorgang von der ersten Speichervorrichtung (3A) zur zweiten Speichervorrichtung (3C) für den Datenbereich der genannten Orte ausführt und
in Antwort darauf, dass der Host-Computer (2A), der die Fernkopieranweisung empfangen hat, die genannte Tabelle bezeichnet, in einer Paarzustandsverwaltungstabelle (48) die festgelegte Paarbeziehung zwischen der Kopierquelle und dem Kopierziel erzeugt.

12. Verfahren nach Anspruch 11, wobei die erste Speichervorrichtung (3A) außerdem folgende Schritte ausführt:
Aktualisieren der Paarzustandsverwaltungstabelle (48) in Abhängigkeit vom Paarbildungszustand der genannten Tabelle und des Protokolls.

13. Verfahren nach Anspruch 12, wobei die erste Speichervorrichtung (3A) dann, wenn die Datenmenge der genannten Tabelle zunimmt, außerdem folgende Schritte ausführt:
neues Zuordnen eines der Tabelle entsprechenden Datenbereichs,
Festlegen einer Paarbildung für den neu zugeordneten Datenbereich in der Paarzustandsverwaltungstabelle (48) und
Ausführen eines Fernkopiervorgangs für Daten eines Kopierobjekts in die als Kopierziel dienende zweite Speichervorrichtung (3C).

14. Verfahren nach Anspruch 13, wobei die zweite Speichervorrichtung (3C) einen Schritt zum Anhalten eines Fernkopiervorgangs einer vom Host-Computer bezeichneten Tabelle im Fall, dass Daten, die in einer unvollständigen Transaktion geändert wurden, unter Verwendung von Informationen des Protokolls der betreffenden Tabelle wiederhergestellt werden, und die Vorrichtung außerdem einen Schritt zum Setzen eines Bits in einer Unterschieds-Bitmap ausführt, das einen Unterschied zwischen Daten der betreffenden zweiten Speichervorrichtung und der ersten Speichervorrichtung (3A) für die betreffenden wiederhergestellten Daten anzeigt.

15. Verfahren nach Anspruch 14, wobei die erste Speichervorrichtung (3A) außerdem folgende Schritte ausführt:
Bewirken einer nach dem Anhalten des Fernkopiervorgangs ausgeführten Datenaktualisierung in der zweiten Speichervorrichtung (3C) unter Verwendung der gebildeten Unterschieds-Bitmap, und
Wiederaufnehmen des Fernkopiervorgangs der bezeichneten Tabelle.

16. Verfahren nach Anspruch 15, wobei die erste Speichervorrichtung (3A) außerdem einen Schritt zum Prüfen des Paarzustands des dem Protokoll und der Tabelle entsprechenden Datenbereichs ausführt,
die Vorrichtung einen Schritt zum Zurückgeben ihres Zustands im Fall, dass der dem Protokoll und der Tabelle entsprechende Datenbereich verdoppelt wurde, ausführt,
die Vorrichtung einen Schritt zum Zurückgeben ihres Zustands im Fall, dass der dem Protokoll und der Tabelle entsprechende Datenbereich kein Verdopplungsobjekt ist, ausführt,
die Vorrichtung einen Schritt zum Zurückgeben ihres Zustands im Fall, dass eine Verdopplung des dem Protokoll und der Tabelle entsprechenden Datenbereichs angehalten ist, ausführt, und
die Vorrichtung einen Schritt zum Zurückgeben ihres Zustands in Fall, dass sich der dem Protokoll und der Tabelle entsprechende Datenbereich im Vorbereitungszustand zur Ausführung eines Kopiervorgangs zur Verdopplung befindet.

17. Verfahren nach Anspruch 16, wobei im Fall, dass die Tabelle des Aktualisierungsobjekts kein geschütztes Objekt ist, und andererseits im Fall, dass die Tabelle ein geschütztes Objekt ist und die Verdopplung nicht angehalten ist, die erste Speichervorrichtung (3A) in Antwort auf eine Anweisung zum Bewirken einer Aktualisierung außerdem einen Schritt zum Bewirken der Aktualisierung des Datenbereichs ausführt.

18. Verfahren nach Anspruch 16, wobei im Fall, dass die Tabelle des Aktualisierungsobjekts ein geschütztes Objekt ist und die Verdopplung angehalten ist, die erste Speichervorrichtung (3A) in Antwort auf eine Anweisung zum Wiederherstellen einer Aktualisierung außerdem einen Schritt zum Ausführen eines Wiederherstellungsprozesses für den Datenbereich unter Verwendung der Informationen aus dem Protokoll ausführt.

19. Verfahren nach Anspruch 16, wobei dann, wenn in einem Teilbereich ein Fehler auftritt, die erste Speichervorrichtung (3A) außerdem einen Schritt zum Anhalten einer Verdopplung für alle anderen von der Tabelle verwendeten Speicherbereiche ausführt und außerdem die als Kopierziel dienende zweite Speichervorrichtung (3C) einen Schritt zum Ausführen eines Wiederherstellungsprozesses für den Datenbereich unter Verwendung der Informationen des Protokolls ausführt.

20. Verfahren nach Anspruch 16, wobei
im Fall, dass die Tabelle des Aktualisierungsobjekts kein geschütztes Objekt ist und andererseits im Fall, dass die Tabelle ein geschütztes Objekt ist und eine Verdopplung nicht angehalten ist, die erste Speichervorrichtung (3A) in Antwort auf eine Anweisung zum Bewirken einer Aktualisierung außerdem einen Schritt zum Bewirken einer Aktualisierung des Datenbereichs ausführt, und,
im Fall, dass die Tabelle eines Aktualisierungsobjekts ein geschütztes Objekt ist und dass eine Verdopplung angehalten ist, die erste Speichervorrichtung (3A) in Antwort auf eine Anweisung zum Wiederherstellen einer Aktualisierung außerdem einen Schritt zur Ausführung eines Wiederherstellungsprozesses für den Datenbereich unter Verwendung der Informationen des Protokolls ausführt, und
die erste Speichervorrichtung (3A) außerdem einen Schritt zum Anhalten einer Verdopplung für alle anderen von der Tabelle verwendeten Bereiche ausführt, wenn in einem Teilbereich ein Fehler aufgetreten ist, während
die zweite Speichervorrichtung (3C) außerdem einen Schritt zur Ausführung eines Wiederherstellungsprozesses für den Datenbereich unter Verwendung der Informationen des Protokolls ausführt.

## Revendications

1. **Système de copie à distance (1) comportant un ordinateur hôte (2A) et un premier dispositif de mémo**risation (3A) dans lequel une mise à jour de données est réalisée sur ledit ordinateur hôte, dans lequel
ledit ordinateur hôte définit une formation de paire entre ledit premier dispositif de mémorisation (3A) servant en tant que source de copie et un second dispositif de mémorisation (3C) servant en tant que destination de copie, conformément à une instruction délivrée à l'avance, **caractérisé en ce que** :
ledit ordinateur hôte a un serveur de base de données (21), et est conçu pour :
exécuter ledit serveur de base de données et gérer une pluralité de tables et une table de conversion (27), toutes étant incluses dans le serveur de base de données (21), la table de conversion (27) mémorisant des relations entre lesdites tables et des emplacements de zones de données dans le premier dispositif de mémorisation (3A) pour lesdites tables,
à la réception d'une instruction de copie à distance spécifiant au moins l'une desdites tables :
spécifier ladite table,
acquérir des emplacements de zones de données dans le premier dispositif de mémorisation (3A) pour ladite table spécifiée et un journal utilisé par ladite table spécifiée, conformément à ladite table de conversion (27), et
ordonner au premier dispositif de mémorisation (3A) d'exécuter une copie à distance de ladite zone de données desdits emplacements de ladite table spécifiée et dudit journal, et **caractérisé en** plus **en ce que** :
ledit premier dispositif de mémorisation (3A) est conçu pour :
réaliser ladite copie à distance depuis le premier dispositif de mémorisation (3A) vers le second dispositif de mémorisation (3C) concernant ladite zone de données desdits emplacements, et
générer dans une table de gestion d'état de paires (48) ladite relation de paire définie entre ladite source de copie et ladite destination de copie en réponse à l'ordinateur hôte (2A) qui a reçu l'instruction de copie à distance spécifiant ladite table.

2. Système de copie à distance selon la revendication 1, dans lequel ledit premier dispositif de mémorisation (3A) met à jour ladite table de gestion d'état de paires (48) en fonction dudit état de formation de paire de ladite table et dudit journal.

3. Système de copie à distance selon la revendication 2, dans lequel ledit premier dispositif de mémorisation (3A), lorsqu'une quantité de données de ladite table augmente, alloue à nouveau une zone de données correspondant à ladite table, définit dans ladite table de gestion d'état de paires (48) une formation de paire de ladite zone de données nouvellement allouée et effectue ensuite une copie à distance de données d'une cible de copie dans ledit second dispositif de mémorisation (3C) servant de destination de copie.

4. Système de copie à distance selon la revendication 3, dans lequel ledit second dispositif de mémorisation (3C), dans le cas où une copie à distance d'une table spécifiée par ledit ordinateur hôte (2A) est suspendue et des données ayant été changées dans une transaction non achevée sont restaurées en utilisant des informations dudit journal de ladite table concernée, formule un bit dans une représentation binaire de différence indiquant une différence entre des données dudit second dispositif de mémorisation concerné et dudit premier dispositif de mémorisation par rapport auxdites données restaurées concernées.

5. Système de copie à distance selon la revendication 4, dans lequel ledit premier dispositif de mémorisation (3A) réalise dans ledit second dispositif de mémorisation (3C) une mise à jour de données réalisée après ladite suspension de copie à distance en utilisant ladite représentation binaire de différence formée et reprend ensuite ladite copie à distance de ladite table spécifiée.

6. Système de copie à distance selon la revendication 5, dans lequel ledit premier dispositif de mémorisation (3A) contrôle un état de paire d'une zone de données correspondant audit journal et à ladite table, dans lequel ledit premier dispositif de mémorisation retourne chaque état de celle-ci dans chaque cas de sorte que ladite zone de données correspondant audit journal et à ladite table est dupliquée, de sorte que ladite zone de données correspondant audit journal et à ladite table n'est pas une cible de duplication que la duplication de ladite zone de données correspondant audit journal et à ladite table est suspendue et en ce que ladite zone de données correspondant audit journal et à ladite table est à un stade de préparation pour effectuer une copie en vue d'une duplication.

7. Système de copie à distance selon la revendication 6, dans lequel ledit premier dispositif de mémorisation (3A), dans un cas où ladite table de cible de mise à jour n'est pas une cible de protection et en variante dans un cas où ladite table est une cible de protection et qu'une duplication n'est pas suspendue, réalise une mise à jour de ladite zone de données en réponse à une instruction pour réaliser une mise à jour.

8. Système de copie à distance selon la revendication 6, dans lequel ledit premier dispositif de mémorisation (3A), dans un cas où ladite table de cible de mise à jour est une cible de protection et où une duplication est suspendue, effectue un traitement de restauration de ladite zone de données en utilisant des informations d'un journal en réponse à une instruction pour restaurer une mise à jour.

9. Système de copie à distance selon la revendication 6, dans lequel ledit premier dispositif de mémorisation (3A), lorsqu'une défaillance se produit dans une partie de zones, suspend une duplication pour toutes les autres zones utilisées par ladite table et effectue un traitement de restauration pour ladite zone de données en utilisant des informations d'un journal dans ledit second dispositif de mémorisation (3C) servant de destination de copie.

10. Système de copie à distance selon la revendication 6, dans lequel
dans un cas où ladite table de cible de mise à jour n'est pas une cible de protection ou ladite table est une cible de protection dans un cas où une duplication n'est pas suspendue, ledit premier dispositif de mémorisation (3A) réalise la mise à jour de ladite zone de données en réponse à une instruction pour réaliser une mise à jour et en variante,
dans un cas où ladite table de cible de mise à jour est une cible de protection et où une duplication est suspendue, ledit premier dispositif (3A) effectue un traitement de restauration de ladite zone de données en utilisant des informations de journal en réponse à une instruction pour restaurer une mise à jour et de plus lorsqu'une défaillance se produit dans une partie de zones où ledit premier dispositif de mémorisation (3A) suspend la duplication pour toutes les autres zones utilisées par ladite table et ledit second dispositif de mémorisation (3C) effectue un traitement de restauration de ladite zone de données en utilisant lesdites informations dudit journal.

11. Procédé à utiliser dans une copie à distance exécutée dans un système de copie à distance (1) comportant un ordinateur hôte (2A) et un premier dispositif de mémorisation (3A) dans lequel une mise à jour de données est réalisée vers et depuis ledit ordinateur hôte, dans lequel :
ledit ordinateur hôte exécute l'étape consistant à :
définir une formation de paire entre ledit premier dispositif de mémorisation servant de source de copie et un second dispositif de mémorisation (3C) servant de destination de copie, conformément à une instruction délivrée à l'avance, et **caractérisé en ce que** :
ledit ordinateur hôte a un serveur de base de données (21), et exécute les étapes supplémentaires consistant à :
exécuter le serveur de base de données (21) et gérer une pluralité de tables et une table de conversion (27), toutes étant incluses dans le serveur de base de données (21), la table de conversion (27) mémorisant des relations entre lesdites tables et des emplacements de zones de données dans ledit premier dispositif de mémorisation (3A) utilisés par lesdites tables, et
à la réception d'une instruction de copie à distance spécifiant au moins l'une desdites tables :
spécifier ladite table,
acquérir des emplacements de zones de données dans ledit premier dispositif de mémorisation (3A) pour ladite table spécifiée et un journal utilisé par ladite table spécifiée, conformément à ladite table de conversion (27), et ordonner audit premier dispositif de mémorisation (3A) d'effectuer une copie à distance de ladite zone de données desdits emplacements de ladite table spécifiée et dudit journal, et **en ce que**
ledit premier dispositif de mémorisation (3A) effectue ladite copie à distance depuis ledit premier dispositif de mémorisation (3A) vers ledit second dispositif de mémorisation (3C) concernant ladite zone de données desdits emplacements, et
génère dans une table de gestion d'état de paires (48) ladite relation de paire définie entre ladite source de copie et ladite destination de copie en réponse à l'ordinateur hôte (2A) qui a reçu l'instruction de copie à distance spécifiant ladite table.

12. Procédé selon la revendication 11, dans lequel ledit premier dispositif de mémorisation (3A) exécute de plus l'étape consistant à :
mettre à jour ladite table de gestion d'état de paires (48) en fonction dudit état de formation de paire de ladite table et dudit journal.

13. Procédé de copie à distance selon la revendication 12, dans lequel ledit premier dispositif de mémorisation (3A), lorsqu'une quantité de données de ladite table augmente, ledit dispositif exécute de plus les étapes consistant à :
allouer à nouveau une zone de données correspondant à ladite table,
définir dans ladite table de gestion d'état de paires (48) une formation de paire de ladite zone de données nouvellement allouée, et
effectuer une copie à distance de données de cible de copie dans ledit second dispositif de mémorisation (3C) servant de destination de copie.

14. Procédé de copie à distance selon la revendication 13, dans lequel ledit second dispositif de mémorisation (3C) exécute une étape de suspension d'une copie à distance d'une table spécifiée par ledit ordinateur hôte et de plus dans un cas où des données ayant été changées dans une transaction non achevée sont restaurées en utilisant des informations dudit journal de ladite table concernée, et ledit dispositif exécute de plus ladite étape de formulation d'un bit dans une représentation binaire de différence indiquant une différence entre des données dudit second dispositif de mémorisation concerné et dudit premier dispositif de mémorisation (3A) par rapport auxdites données restaurées concernées.

15. Procédé de copie à distance selon la revendication 14, dans lequel ledit premier dispositif de mémorisation (3A) exécute de plus les étapes consistant à :
réaliser dans ledit second dispositif de mémorisation (3C) une mise à jour de données effectuée après ladite suspension de copie à distance, en utilisant ladite représentation binaire de différence formée, et
reprendre ladite copie à distance de ladite table spécifiée.

16. Procédé de copie à distance selon la revendication 15, dans lequel ledit premier dispositif de mémorisation (3A) effectue de plus une étape de contrôle dudit état de paire de ladite zone de données correspondant audit journal et à ladite table,
ledit dispositif exécute une étape de retour d'un de ses états dans un cas où ladite zone de données correspondant audit journal et à ladite table est dupliquée,
ledit dispositif effectue une étape de retour d'un de ses états dans un cas où ladite zone de données correspondant audit journal et à ladite table n'est pas une cible de duplication,
ledit dispositif effectue une étape de retour d'un de ses états dans un cas où une duplication de ladite zone de données correspondant audit journal et à ladite table est suspendue, et
ledit dispositif effectue une étape de retour d'un de ses états dans un cas où ladite zone de données correspondant audit journal et à ladite table se trouve à un stade de préparation pour effectuer une copie en vue d'une duplication.

17. Procédé de copie à distance selon la revendication 16, dans lequel, dans un cas où ladite table de cible de mise à jour n'est pas une cible de protection et en variante dans un cas où ladite table est une cible de protection et où une duplication n'est pas suspendue, ledit premier dispositif de mémorisation (3A) effectue de plus une étape de réalisation de ladite mise à jour de ladite zone de données en réponse à une instruction pour réaliser une mise à jour.

18. Procédé de copie à distance selon la revendication 16, dans lequel, dans un cas où ladite table de ladite cible de mise à jour est une cible de protection et où une duplication est suspendue, ledit premier dispositif de mémorisation (3A) effectue de plus une étape d'exécution d'un traitement de restauration pour ladite zone de données en utilisant lesdites informations dudit journal en réponse à une instruction pour restaurer une mise à jour.

19. Procédé de copie à distance selon la reven**dication 16, dans lequel, lorsqu'une défaillance se pro**duit dans une partie de zones, ledit premier dispositif de mémorisation (3A) exécute de plus une étape de suspension de duplication pour toutes les autres zones utilisées par ladite table et de plus ledit second dispositif de mémorisation (3C) servant de destination de copie effectue de plus une étape d'exécution d'un traitement de restauration de ladite zone de données en utilisant lesdites informations dudit journal.

20. Procédé de copie à distance selon la revendication 16, dans lequel
dans un cas où ladite table de cible de mise à jour n'est pas une cible de protection, et en variante dans un cas où ladite table est une cible de protection et où une duplication n'est pas suspendue, ledit premier dispositif de mémorisation (3A) exécute de plus une étape de réalisation d'une mise à jour de ladite zone de données en réponse à une instruction de réalisation d'une mise à jour, et
dans un cas où ladite table de cible de mise à jour est une cible de protection et où une duplication est suspendue, ledit premier dispositif de mémorisation (3A) réalise de plus une étape d'exécution d'un traitement de restauration de ladite zone de données en utilisant lesdites informations dudit journal en réponse à une instruction de restauration d'une mise à jour, et
ledit premier dispositif de mémorisation (3A) exécute de plus une étape de suspension de duplication pour toutes les autres zones utilisées par ladite table lorsqu'une défaillance se produit dans une partie de zones, pendant que
ledit second dispositif de mémorisation (3C) exécute de plus une étape pour exécuter un traitement de restauration de ladite zone de données en utilisant lesdites informations dudit journal.
